# EUROPEAN PATENT APPLICATION

(11) **EP 4 372 368 A1**
(43) Date of publication of application: **22.05.2024**
(21) Application number: 23153959.4
(22) Date of filing: 30.01.2023
(51) Int. Cl.: G01N 21/84, G01N 21/3581

(54) **METHOD FOR DETERMINING THE MICROSTRUCTURE FOR A COATING**

(30) Priority: 16.11.2022 IN 202211065712
(71) Applicant: General Electric Company, Schenectady, NY 12345 (US)
(72) Inventor: KULKARNI, Aditya, Schenectady, 12345 (US); SEN GUPTA, Esha, Schenectady, 12345 (US); T, Vishwanath, Schenectady, 12345 (US); B K, Prasanna, Schenectady, 12345 (US)
(74) Representative: Openshaw & Co.

(57) **Abstract**

A method (500, 600) for determining (510, 611) a microstructure of a coating (120) on a component (116). The method (500, 600) includes projecting (502, 602) at least a first electromagnetic signal in a first plane of polarization onto the coating (120) and a second electromagnetic signal in a second plane of polarization is onto the coating (120). A first and second time delay (406, 416, 430) can be determined. The microstructure of the coating (120) is based on a difference between at least two time delays (406, 416, 430).

## Description

### TECHNICAL FIELD

The disclosure generally relates to inspecting a coating on a substrate, more specifically, to a non-destructive inspection of single or multi-layer coating structures deposited on substrates.

### BACKGROUND

Operating temperatures of engines, for example gas turbine engines, can provide an environment where substrates or surfaces of components are subjected to high temperatures. As a result, the substrates or surfaces of the components can include one or more coatings, where the coating can be a single or multi-layer coating. The microstructure of the coatings can depend on the process parameters of the coating application process, which can impact the quality of the coating.

### BRIEF DESCRIPTION OF THE DRAWINGS

A full and enabling disclosure of the present disclosure, including the best mode thereof, directed to one of ordinary skill in the art, is set forth in the specification, which makes reference to the appended figures, in which:
FIG. 1 is a schematic cross-sectional view of a gas turbine engine for an aircraft.
FIG. 2 is a schematic top-down view of an inspection system that can be used for one or more components of the gas turbine engine of FIG. 1 in accordance with an exemplary embodiment of the present disclosure.
FIG. 3 is a schematic illustration of a first polarizer and a second polarizer in a first orientation of the inspection system of FIG. 2 in accordance with an exemplary embodiment of the present disclosure.
FIG. 4 is a schematic illustration of the first polarizer and a second polarizer in a second orientation of the inspection system of FIG. 2 in accordance with an exemplary embodiment of the present disclosure.
FIG. 5 is a graph illustrating an example of test results obtained from the inspection system of FIG. 2 in accordance with an exemplary embodiment of the present disclosure.
FIG. 6 is an image of a type of microstructure for a coating in an exemplary embodiment of the present disclosure.
FIG. 7 is an image of the microstructure of FIG. 6 taken along line VII-VII of FIG. 6.
FIG. 8 is a graph illustrating another example of test results obtained from the inspection system of FIG. 2 in accordance with an exemplary embodiment of the present disclosure.
FIG. 9 is an image of another type of microstructure for a coating in an exemplary embodiment of the present disclosure.
FIG. 10 is an image of the microstructure of FIG. 9 taken along line X-X of FIG. 9.
FIG. 11 is a graph illustrating a set of time differences obtained from the inspection system of FIG. 2 in accordance with an exemplary embodiment of the present disclosure.
FIG. 12 illustrates a flowchart of a method of for determining the microstructure of the coating of a component of the turbine engine of FIG. 1 in accordance with an exemplary embodiment of the present disclosure.
FIG. 13 illustrates another flowchart of a method of for determining the microstructure of the coating of a component of the turbine engine of FIG. 1 in accordance with an exemplary embodiment of the present disclosure.

### DETAILED DESCRIPTION

Traditionally, microstructures of coatings, such as thermal barrier coatings applied to one or more substrate of a turbine engine parts, are inspected by destructive analysis. The destructive analysis includes at least cutting the coating of a sample taken from a group of components. The cut allows an area of interest to be polished and inspected. The inspected part becomes scrap and based on the results of the destructive inspection, the remainder of the parts in the group move forward in production or are rejected based. This process can take about 24-48 hours and includes a loss of one or more parts.

Non-destructive methods of inspecting a coating applied to a component can include application of a plurality of electromagnetic pulses at different incident angles to an area of interest by physically moving the component or the source of the plurality of electromagnetic pulses. That is, the component or the electromagnetic wave source is physically moved so that the electromagnetic wave can hit the area of interest from a variety of incident angles. The detection and analysis of the refracted and reflected electromagnetic pulses at the different incident angles provides information from which the microstructure of the coating can be determined.

Aspects of the disclosure herein are directed to a method for determining a microstructure of a coating without moving the component or the electromagnetic wave source. The method includes projecting a first electromagnetic signal in a first plane of polarization onto the coating and a second electromagnetic signal in a second plane of polarization onto a coated portion of the component, where the first electromagnetic signal and the second electromagnetic signal are projected on a same point of interest or overlapping location. A first time delay and second time delay are determined, based on, respective reflected portions of the first or second electromagnetic signal and refracted and reflected portion of the first or second electromagnetic signal. Once the first time delay and the second time delay are determined or calculated a difference between the first and second time delay can be determined or realized. The difference between the first time delay and the second time delay can correspond to a microstructure of the coating.

Alternatively, a set of time delays can be determined from a set of electromagnetic signals projected on the component at a variety of different planes of polarization. A difference between a maximum and minimum value identified from the set of time delays can correspond to the microstructure of the coating.

Reference will now be made in detail to a gas turbine engine where several components include at least one coating, often a thermal barrier coating. The detailed description uses numerical and letter designations to refer to features in the drawings.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "forward" and "aft" refer to relative positions within a gas turbine engine or vehicle, and refer to the normal operational attitude of the gas turbine engine or vehicle. For example, with regard to a gas turbine engine, forward refers to a position closer to an engine inlet and aft refers to a position closer to an engine nozzle or exhaust.

As used herein, the term "upstream" refers to a direction that is opposite the fluid flow direction, and the term "downstream" refers to a direction that is in the same direction as the fluid flow. The term "fore" or "forward" means in front of something and "aft" or "rearward" means behind something. For example, when used in terms of fluid flow, fore/forward can mean upstream and aft/rearward can mean downstream.

The term "fluid" may be a gas or a liquid, or multi-phase. The term "fluid communication" means that a fluid is capable of making the connection between the areas specified.

Additionally, as used herein, the term "radial" refers to a direction away from a common center. For example, in the overall context of a turbine engine, radial refers to a direction along a ray extending between a center longitudinal axis of the engine and an outer engine circumference.

Additionally, as used herein, a "controller" or "controller module" can include a component configured or adapted to provide instruction, control, operation, or any form of communication for operable components to affect the operation thereof. A controller module can include any known controller module, processor, microcontroller, or logic device, including, but not limited to: field programmable gate arrays (FPGA), an application specific integrated circuit (ASIC), a full authority digital engine control (FADEC), a proportional controller (P), a proportional integral controller (PI), a proportional derivative controller (PD), a proportional integral derivative controller (PID controller), a hardware-accelerated logic controller (e.g. for encoding, decoding, transcoding, etc.), the like, or a combination thereof. Non-limiting examples of a controller module can be configured or adapted to run, operate, or otherwise execute program code to effect operational or functional outcomes, including carrying out various methods, functionality, processing tasks, calculations, comparisons, sensing or measuring of values, or the like, to enable or achieve the technical operations or operations described herein. The operation or functional outcomes can be based on one or more inputs, stored data values, sensed or measured values, true or false indications, or the like. While "program code" is described, non-limiting examples of operable or executable instruction sets can include routines, programs, objects, components, data structures, algorithms, etc., that have the technical effect of performing particular tasks or implementing particular abstract data types. In another non-limiting example, a controller module can also include a data storage component accessible by the controller module or processor, including memory, whether transient, volatile or non-transient, or non-volatile memory. Additional non-limiting examples of the memory can include Random Access Memory (RAM), Read-Only Memory (ROM), flash memory, or one or more different types of portable electronic memory, such as discs, DVDs, CD-ROMs, flash drives, universal serial bus (USB) drives, the like, or any suitable combination of these types of memory. In one example, the program code can be stored within the memory in a machine-readable format accessible by the controller module or the processor. Additionally, the memory can store various data, data types, sensed or measured data values, inputs, generated or processed data, or the like, accessible by the controller module or the processor in providing instruction, control, or operation to affect a functional or operable outcome, as described herein.

All directional references (e.g., radial, axial, proximal, distal, upper, lower, upward, downward, left, right, lateral, front, back, top, bottom, above, below, vertical, horizontal, clockwise, counterclockwise, upstream, downstream, forward, aft, etc.) are only used for identification purposes to aid the reader's understanding of the present disclosure, and do not create limitations, particularly as to the position, orientation, or use of aspects of the disclosure described herein. Connection references (e.g., attached, coupled, connected, and joined) are to be construed broadly and can include intermediate structural elements between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

The singular forms "a", "an", and "the" include plural references unless the context clearly dictates otherwise. Furthermore, as used herein, the term "set" or a "set" of elements can be any number of elements, including only one.

"Optional" or "optionally" means that the subsequently described event or circumstance may or may not occur, and that the description includes instances where the event occurs and instances where it does not.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

As used herein, the term "coating" can be a single or multi-layer coating. The single or multi-layers of the coating can be deposited, applied, or otherwise formed on surfaces or substrates of one or more portions of a component. The coating can be a thermal barrier coating (TBC). The TBC can be between 60 micrometers and 4 millimeters thick.

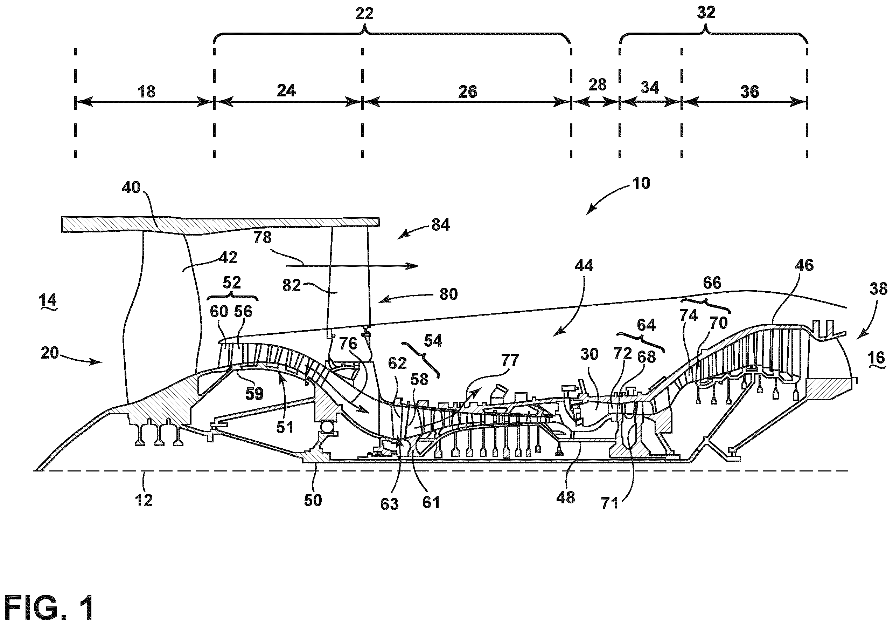

FIG. 1 is a schematic cross-sectional diagram of a gas turbine engine, specifically a gas turbine engine 10 for an aircraft. The gas turbine engine 10 has a generally longitudinally extending axis or engine centerline 12 extending forward 14 to aft 16. The gas turbine engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38. The gas turbine engine 10 as described herein is meant as a non-limiting example, and other architectures are possible, such as, but not limited to, the steam turbine engine, the supercritical carbon dioxide turbine engine, or any other suitable turbine engine

The fan section 18 includes a fan casing 40 surrounding the fan 20. The fan 20 includes a set of fan blades 42 disposed radially about the engine centerline 12. The HP compressor 26, the combustor 30, and the HP turbine 34 form an engine core 44 of the gas turbine engine 10, which generates combustion gases. The engine core 44 is surrounded by core casing 46, which can be coupled with the fan casing 40.

A HP shaft or spool 48 disposed coaxially about the engine centerline 12 of the gas turbine engine 10 drivingly connects the HP turbine 34 to the HP compressor 26. A LP shaft or spool 50, which is disposed coaxially about the engine centerline 12 of the gas turbine engine 10 within the larger diameter annular HP spool 48, drivingly connects the LP turbine 36 to the LP compressor 24 and fan 20. The spools 48, 50 are rotatable about the engine centerline 12 and couple to a set of rotatable elements, which can collectively define a rotor 51.

The LP compressor 24 and the HP compressor 26 respectively include a set of compressor stages 52, 54, in which a set of compressor blades 56, 58 rotate relative to a corresponding set of static compressor vanes 60, 62 (also called a nozzle) to compress or pressurize the stream of fluid passing through the stage. In a single compressor stage 52, 54, multiple compressor blades 56, 58 can be provided in a ring and can extend radially outwardly relative to the engine centerline 12, from a blade platform to a blade tip, while the corresponding static compressor vanes 60, 62 are positioned upstream of and adjacent to the rotating compressor blades 56, 58. It is noted that the number of blades, vanes, and compressor stages shown in FIG. 1 were selected for illustrative purposes only, and that other numbers are possible.

The compressor blades 56, 58 for a stage of the compressor can be mounted to a disk 61, which is mounted to the corresponding one of the HP and LP spools 48, 50, with each stage having its own disk 61. The static compressor vanes 60, 62 for a stage of the compressor can be mounted to the core casing 46 in a circumferential arrangement.

The HP turbine 34 and the LP turbine 36 respectively include a set of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the engine centerline 12, from a blade platform to a blade tip, while the corresponding static turbine vanes 72, 74 are positioned upstream of and adjacent to the rotating turbine blades 68, 70. It is noted that the number of blades, vanes, and turbine stages shown in FIG. 1 were selected for illustrative purposes only, and that other numbers are possible.

The turbine blades 68, 70 for a stage of the turbine can be mounted to a disk 71, which is mounted to the corresponding one of the HP and LP spools 48, 50, with each stage having a dedicated disk 71. The static turbine vanes 72, 74 for a stage of the compressor can be mounted to the core casing 46 in a circumferential arrangement.

Complementary to the rotor portion, the stationary portions of the gas turbine engine 10, such as the static compressor vanes 60, 62, and the static turbine 72, 74 among the compressor and turbine sections 22, 32 are also referred to individually or collectively as a stator 63. As such, the stator 63 can refer to the combination of non-rotating elements throughout the gas turbine engine 10.

In operation, the airflow exiting the fan section 18 is split such that a portion of the airflow is channeled into the LP compressor 24, which then supplies pressurized airflow 76 to the HP compressor 26, which further pressurizes the air. The pressurized airflow 76 from the HP compressor 26 is mixed with fuel in the combustor 30 and ignited, thereby generating combustion gases. Some work is extracted from these gases by the HP turbine 34, which drives the HP compressor 26. The combustion gases are discharged into the LP turbine 36, which extracts additional work to drive the LP compressor 24, and the exhaust gas is ultimately discharged from the gas turbine engine 10 via the exhaust section 38. The driving of the LP turbine 36 drives the LP spool 50 to rotate the fan 20 and the LP compressor 24. The pressurized airflow 76 and the combustion gases can together define a working airflow that flows through the fan section 18, compressor section 22, combustion section 28, and turbine section 32 of the gas turbine engine 10.

A portion of the pressurized airflow 76 can be drawn from the compressor section 22 as bleed airflow 77. The bleed airflow 77 can be drawn from the pressurized airflow 76 and provided to engine components requiring cooling. The temperature of pressurized airflow 76 entering the combustor 30 is significantly increased. As such, cooling provided by the bleed airflow 77 is necessary for operating of such engine components in the heightened temperature environments.

A remaining portion of airflow 78 bypasses the LP compressor 24 and engine core 44 and exits the gas turbine engine 10 through a stationary vane row, and more particularly an outlet guide vane assembly 80, comprising a set of airfoil guide vanes 82, at a fan exhaust side 84. More specifically, a circumferential row of radially extending airfoil guide vanes 82 are utilized adjacent the fan section 18 to exert some directional control of the airflow 78.

Some of the air supplied by the fan 20 can bypass the engine core 44 and be used for cooling of portions, especially hot portions, of the gas turbine engine 10, and/or used to cool or power other aspects of the aircraft. In the context of a gas turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

As used therein, the term "plane of polarization" refers to a plane containing the propagation direction of the EM wave and, for example, the electric vector. For linearly-polarized light, the plane of polarization can be along the direction of propagation, along which the electric field vector (or magnetic field vector) is confined.

As used therein, the term "axis of a polarizer" or "axis of a polarizing filter" is the direction of the slits of the polarizer. Polarizers or polarizing filters with linear axes can provide linearly-polarized light.

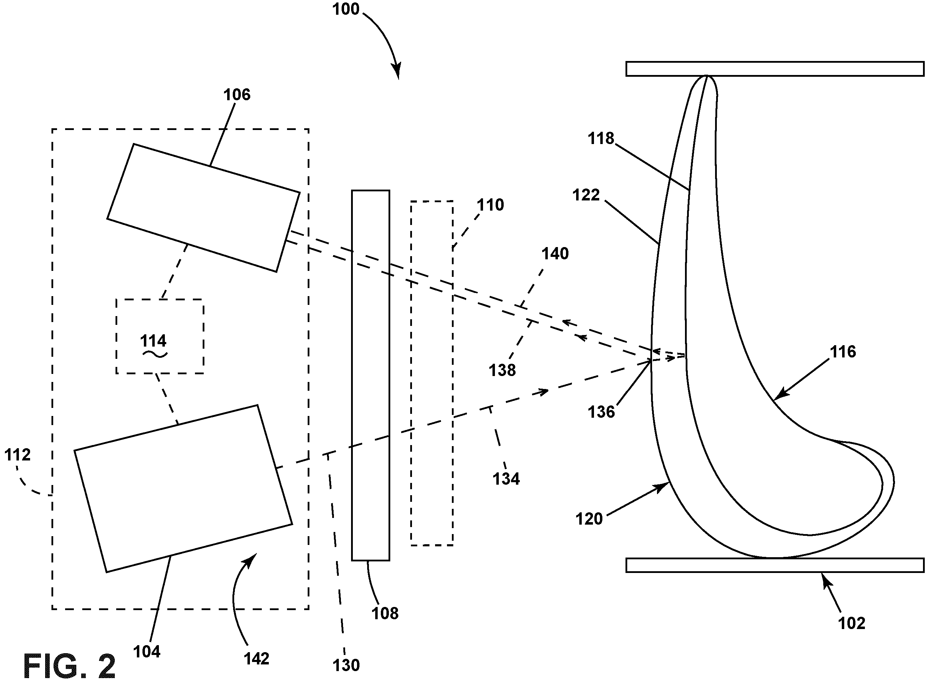

FIG. 2 is a schematic top-down view of an inspection system 100 for one or more components of the turbine engine 10 (FIG. 1). The inspection system 100 includes a mount assembly 102, an electromagnetic (EM) wave source 104, an EM wave detector 106, and at least one polarizer, illustrated as a first polarizer 108. While illustrated as having the first polarizer 108, it is contemplated that the inspection system 100 can include any number of polarizers, including two polarizers.

Optionally, the EM wave source 104 and the EM wave detector 106 can be included in an EM wave assembly 112. Optionally, at least one controller 114 can be included in or in communication with the EM wave source 104, the EM wave detector 106, or the EM wave assembly 112. For example, the EM wave detector 106 can provide an output of a detected signal to the controller 114.

The mount assembly 102 can be any suitable platform or retaining assembly and include any number of clamps, fasteners, or retaining devices such that the mount assembly 102 can receive a component. The mount assembly 102 is not limiting. The component is illustrated, by way of example, as an airfoil 116. However, any other component could be used. The airfoil 116 can be, for example, the blades 68, 70 or vanes 72, 74 of the turbine section 32 (see FIG. 1). While the remainder of the specification discusses a component of the turbine engine 10 it will be understood that the present disclosure is not so limited and the methods and apparatus disclosed herein may be used on any suitable coated component. The airfoil 116 can include a surface or substrate 118 having a coating 120 deposited thereon (exaggerated for illustration purposes). The coating 120 can cover one or more portions of the substrate 118 of the airfoil 116 and can have uniform or varying thicknesses.

The substrate 118 and the coating 120 can include or be fabricated from any material that enables the inspection system 100 to function as described herein. The substrate can include or be formed from any material or combination of materials that reflect the EM signal provided by the EM wave source 104. By way of non-limiting example, the substrate 118 can include one or more materials such as, but not limited to, metallic materials, nickel, metal alloy, semi-conductor material, di-electric material, cobalt, or any combination thereof by way of non-limiting examples. The coating 120 can include or be formed from any material or combination of materials, such as, but not limited to, a ceramic material, semi-conductor material, di-electric material, or any combination thereof by way of non-limiting examples.

The EM wave source 104 can provide terahertz radiation. That is, the EM wave source can provide or supply EM waves or an EM signal having frequencies from 0.001 to 10.0 terahertz (or 1 gigahertz to 10 terahertz). More specifically, the EM wave source 104 can provide or supply an EM signal having frequencies from 0.05 to 4.5 terahertz. By way of non-limiting example, the EM wave source 104 can provide or supply an EM signal having frequencies from 0.05 to 1.0 terahertz or 1.0 to 2.5 terahertz. Further, it is contemplated that the EM wave source 104 can provide or supply an EM signal having frequencies 2.5 to 4.5 terahertz. Increasing frequency of the EM signal can result in an increase in spatial resolution, providing improved accuracy in determining the microstructure of the coating 120 at a desired area or a same point of interest illustrated as an area of interest 136. The terahertz wave, also known as a T-wave, can be provided or supplied as a plurality of pulses. While the EM wave source 104 is illustrated as a single source, any number of EM wave sources are contemplated. The EM signal provided by the EM wave source 104 can be polarized or unpolarized. For example, the EM wave source 104 can provide EM signal having an oscillating electric field confined to a single plane along the direction of propagation. That is, the EM wave source 104 can supply linearly-polarized light as the EM signal.

The EM wave detector 106 can detect an EM signal. The EM wave detector 106 is located to receive or detect electromagnetic waves reflected from a surface 122 of the coating 120. The EM wave detector 106 can also detect electromagnetic waves refracted by the coating 120 and reflected by the substrate 118 of the airfoil 116. While the EM wave detector 106 is illustrated as a single detector, any number of EM wave detectors are contemplated.

Optionally, the inspection system 100 can include optical accessories (not shown) such as lenses, mirrors, filters, or other devices used to at least direct, focus, amplify, or filter the electromagnetic wave provided by the EM wave source 104 or received by the EM wave detector 106.

Optionally, the inspection system 100 can include one or more sensors (not shown). By way of non-limiting example, the inspection system can include a distance sensor. The distance sensor can provide a distance between one or more components of the inspection system. For example, the distance sensor can provide a distance between the airfoil 116 and the EM wave source 104.

The controller 114 can be included in or in communication with the EM wave source 104 to control the electromagnetic wave provided by the EM wave source 104. Additionally, or alternatively, the controller 114 can be included in or in communication with the EM wave detector 106 to gather, interpret, process, or otherwise communicate the EM signal received at the EM wave detector 106. While the controller 114 is illustrated as a single controller, any number of controllers are contemplated.

The first polarizer 108 is located between the EM wave source 104 and the airfoil 116. The first polarizer 108 receives the EM signal from the EM wave source 104. While illustrated as spaced from the EM wave source 104, it is contemplated that the first polarizer 108 can be coupled to or included in the EM wave source 104. The first polarizer 108 can be a first linear polarizer, polarizing the EM signal emitted from the EM wave source 104. Optionally, the first polarizer 108 can also receive the EM waves reflected from the surface 122 of the coating 120 or reflected from the substrate 118. That is, the first polarizer 108 can extend in such a way that the first polarizer 108 is between the airfoil 116 and the EM wave detector 106.

The EM signal is schematically illustrated in the direction of propagation by a source signal 130. That is, the EM signal or the source signal 130 can be emitted, projected, or supplied by the EM wave source 104. The source signal 130 is received by the first polarizer 108. A polarized signal 134, schematically illustrated in the direction of propagation, is then projected on the airfoil 116. At least a portion of the polarized signal 134 can be reflected by the area of interest 136 at the surface 122 of the coating 120 to define a reflected signal 138. That is, the reflected signal 138 is defined as a portion of the polarized signal 134 reflected at an interface of air and the surface 122. The reflected signal 138 is schematically illustrated in the direction of propagation.

A refracted and reflected signal 140 is defined by at least a portion of the polarized signal 134 refracted by the coating 120 and reflected by the substrate 118. That is, the refracted and reflected signal 140 is defined as a portion of the polarized signal 134 that is reflected at an interface of the coating 120 and the substrate 118. The refracted and reflected signal 140 is schematically illustrated in the direction of propagation.

An EM source system 142 can include at least one source signal illustrated as the source signal 130 and at least one polarizer. The EM source system 142 is illustrated, by way of example, as having the source signal 130 and the first polarizer 108. The EM source system 142 is capable of providing a polarized EM signal to the component illustrated as the airfoil 116.

The EM source system 142 can provide a set of EM signals at different planes of polarization. By way of non-limiting example, when the source signal 130 is polarized, the first polarizer 108 can be positioned between, but not equal to, -90 degrees and 90 degrees relative to the plane of polarization of the source signal 130. In the first position, the polarizer will provide a first EM signal to the airfoil 116 in a first plane of polarization.

The first polarizer 108 can then be rotated to another or different position between, but not equal to, -90 degrees and 90 degrees relative to the plane of polarization of the source signal 130. In the second position, the first polarizer 108 can provide a second EM signal to the airfoil 116 in a second plane of polarization. The second plane of polarization different from the first plane of polarization.

Optionally, the EM source system 142 can include additional polarizers. Additional polarizers can allow for the plane of polarization to be at angles greater than or past -90 degrees and +90 degrees with respect to the source signal 130. For example, a second polarizer 110 is illustrated. The second polarizer 110 can be located between the first polarizer 108 and the component or airfoil 116. The second polarizer receives a polarized EM wave or EM signal from the first polarizer 108. While illustrated as spaced from the EM wave source 104 and the first polarizer 108, it is contemplated that the second polarizer 110 can be coupled to the first polarizer 108, the EM wave source 104, or both.

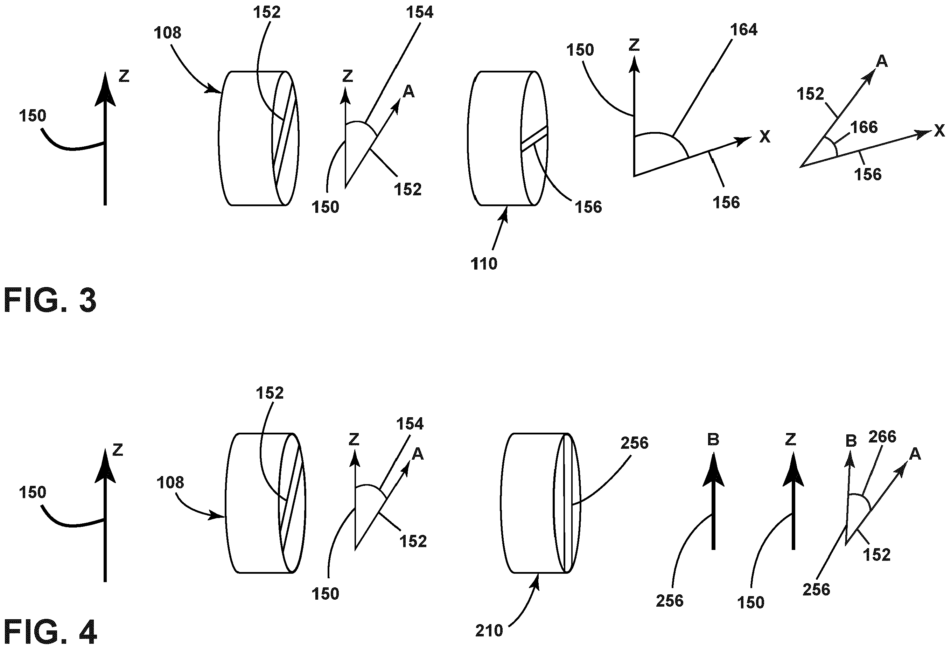

Optionally, the second polarizer 110 can receive the EM waves reflected from the surface 122 of the coating 120 or refracted and reflected from the substrate 118. The second polarizer 110 can be a second linear polarizer. An intermediate signal can travel from the first polarizer 108 to the second polarizer 110. The polarized signal 134 can then be projected on the airfoil 116. The polarized signal 134 depends on how the first polarizer 108 and the second polarizer 110 are oriented. By way of non-limiting examples, FIG. 3 and FIG. 4 illustrate how the combination of the first polarizer 108 and the second polarizer 110 can provide EM signals at different planes of polarization.

FIG. 3 is a schematic illustration of the first polarizer 108 and the second polarizer 110 in a first orientation. The EM signal provided by the EM wave source 104 (see FIG. 2) can be, for example, linearly-polarized such that the electric field oscillates along a Z-axis 150. The Z-axis 150 or source axis of oscillation, with the propagation direction, can define a source plane of polarization. The first polarizer 108 can have a first pass axis 152 illustrated along an A-axis.

A first angle 154 is measured between the Z-axis 150 and the first pass axis 152 or A-axis when in the first orientation. The first angle 154 can be, as illustrated by the example, a 45-degree angle. Alternatively, the first angle 154 can be between -90 degrees and 90 degrees with respect to the Z-axis. In other words, the first angle 154 is greater than or less than -90 degrees and greater than or less than 90 degrees with respect to the source plane of polarization illustrated as the Z-axis. That is, the angle between the Z-axis and the A-axis can be any angle which results in an EM signal beyond the first polarizer 108.

The second polarizer 110 can have a second pass axis 156 illustrated along an X-axis. A second angle 164 is measured between the Z-axis 150 and the second pass axis 156. The second angle 164 can be different or not equal to the first angle 154, however, it is contemplated that the second angle 164 can be equal to the first angle 154. By way of example, the second angle 164 can be a 90-degree angle. That is, the Z-axis 150 and the second pass axis 156 can be generally perpendicular when the second polarizer 110 is in the first orientation. The term "generally perpendicular" is defined as an angle equal to or between 85 degrees and 95 degrees. While illustrated as a 90-degree angle, it is contemplated that the second angle 164 can be any angle that provides and an EM signal beyond the second polarizer 110.

A first pass angle 166 can be measured between the first pass axis 152 and the second pass axis 156. While illustrated as 45 degrees, the first pass angle 166 can be between -90 degrees and 90 degrees. That is, the first pass angle 166 can be any angle which results in an EM signal beyond the second polarizer 110.

When in the first orientation (FIG. 3), the X-axis (or axis of oscillation) and the propagation direction of the EM signal beyond the second polarizer 110 can define a first plane of polarization.

The EM signal leaving the second polarizer 110, when the second polarizer 110 is in the first orientation, can be a first EM signal or a first polarized signal having an electric field bound to a plane defined in part by the X-axis. That is, the first EM signal can be in the first plane of polarization.

FIG. 4 is a schematic illustration of the first polarizer 108 and a second polarizer 210 in a second orientation. The Z-axis 150 or source axis of oscillation and the first polarizer 108 having the first pass axis 152 illustrated along the A-axis are illustrated, by way of example, in the same position as FIG. 3.

The second polarizer 210, in the second orientation, includes a second pass axis 256 along a B-axis. The second polarizer 210 can be the second polarizer 110, having been rotated to the second orientation. As illustrated, by way of example, the second polarizer 210 is the second polarizer 110 having been rotated 90 degrees. Alternatively, the second polarizer 210 can be a different polarizer that replaces the second polarizer 110 or is added to the second polarizer 110.

The second pass axis 256 in the second orientation, is at a different angle to the Z-axis 150 than the second pass axis 156 in the first orientation. That is, a third angle can be measured between the Z-axis 150 and the second pass axis 256.

The third angle can be, by way of example, a zero-degree angle. That is, the Z-axis 150 and the second pass axis 256 can be parallel in the second orientation.

However, it is contemplated that the third angle can be any angle at which a signal is provided to the airfoil 116.

A second pass angle 266 can be measured between the first pass axis 152 and the second pass axis 256. While illustrated as 45 degrees, the second pass angle 266 can be between -90 degrees and 90 degrees. That is, the second pass angle 266 can be any angle which results in an EM signal beyond the second polarizer 210. The EM signal leaving the second polarizer 210 can be a second EM signal or a second polarized signal having an electric field bound to a plane defined in part by the B-axis. The B-axis (or axis of oscillation), along with the propagation direction, can define a second plane of polarization, different than the first plane of polarization. That is, the second EM signal is in the second plane of polarization.

Alternatively, it is further contemplated that in a differing and non-limiting example, a second orientation can result from the rotation or replacement of the first polarizer 108 (not shown). For example, the second pass axis 256 can be along the same axis as the second pass axis 156 from the first orientation, while the first polarizer 108 and the first pass axis 152 can be rotated or replaced. That is, the first angle 154 or the first pass axis 152 can vary from the first position to the second position.

Alternatively, in yet another a differing and non-limiting example, a second orientation can result from the rotation or replacement of the first polarizer 108 (not shown) and the second polarizer 110, 210. Rotating or replacing the first polarizer 108 (not shown) and the second polarizer 110, 210 can result in the second plane of polarization being different than the first plane of polarization.

Further, any combination or number of polarizers having a variety of pass axes are contemplated. That is, any combination or number of polarizers that provide an EM signal (after passing through at least one polarizer) where the rotation, addition, or replacement of the any combination or number of polarizers provides different planes of polarization are contemplated.

Referring to FIG. 2, in operation, the component (illustrated as airfoil 116) is placed in the mount assembly 102. The first polarizer 108 and optionally the second polarizer 110 are positioned in the first position or the first orientation. The EM wave source 104 provides, supplies, or otherwise emits an EM signal or source signal 130 that can be a plurality of EM pulses, an EM wave, or EM waves. The EM signal supplied by the EM wave source 104 can be a polarized terahertz EM signal.

The EM signal or source signal 130 from the EM wave source 104 is projected or directed to the first polarizer 108. Optionally, the EM wave source 104 can be controlled by the controller 114. That is, the controller 114 can provide information to the EM wave source 104 to determine, for example, intensity, frequency, or pre-polarization of the signal prior to emission from the EM wave source 104.

The source signal 130, after passing through and being polarized by the first polarizer 108, can define the first EM signal in the first plane of polarization.

Alternatively, in the situation where there are two polarizers, the source signal 130, after passing through and being polarized by the first polarizer 108, can define the intermediate signal. The intermediate signal can have a plane of polarization different than the plane of polarization of the source signal 130. The intermediate signal is projected or directed to the second polarizer 110. The intermediate signal, after passing through and being polarized by the second polarizer 110 can define the first polarized signal or the first EM signal resulting from the first orientation (see FIG. 3) of the first polarizer 108 and the second polarizer 110. That is, the first polarizer 108 in the first position or the first polarizer 108 and the second polarizer 110 in the first orientation can define the first EM signal in the first plane of polarization, where the first polarized signal is projected to the coating 120.

The first EM signal projected or directed at the coating 120 of the airfoil 116 can be, more specifically, projected onto the surface 122 of the coating 120 at the area of interest 136. At least a portion of the first EM signal is reflected at the surface 122 of the coating 120, defining the reflected signal or a surface reflected EM signal. The surface reflected EM signal may or may not pass back through the first polarizer 108 or the second polarizer 110 prior to detection at the EM wave detector 106.

At least a portion of the first EM signal penetrates the coating 120 and is reflected by the substrate 118, defining the refracted and reflected EM signal or a substrate reflected EM signal. The substrate reflected EM signal may or may not pass back through the first polarizer 108 or the second polarizer 110 prior to detection at the EM wave detector 106.

The EM wave detector 106 or the controller 114 receives or detects the surface and substrate EM signals reflected from the surface 122 and the substrate 118, respectively.

The detected surface and substrate EM signals of the reflected first EM signal can be stored, filtered, or otherwise processed at the EM wave detector 106 or the controller 114. The detected surface and substrate EM signals obtained while the first polarizer 108 or the first and second polarizers 108, 110 in the first position or the first orientation can be used to define a first data set. The first data set can include information related to detected signal as a function of time. The information related to the detected surface and substrate EM signals can include, but is not limited to, the frequency, amplitude, wavelength, or intensity.

Once the first data set is obtained, the inspection system 100 is moved to the second position or the second orientation (such as by way of non-limiting example the orientation in FIG. 4) to project or direct a second polarized signal at the area of interest 136. The first polarized signal and the second polarized signal have the same propagation direction; however, their respective electric fields are contained in different planes. That is, the first plane of polarization defined by the first polarized signal is different than a second plane of polarization defined by the second polarized signal.

By way of example, the first polarizer 108 or the second polarizer 210 can be positioned in the second position or the second orientation, resulting in the second EM signal. The second EM signal is in the second plane of polarization. As illustrated, by way of non-limiting example, angular difference between the first plane of polarization and the second plane of polarization can be any non-zero angle, including 90 degrees. That is, the first plane of polarization can be generally perpendicular to the second plane of polarization, where the angle between the plane of polarization and the second plane of polarization is equal to or between 85 degrees and 95 degrees.

At least a portion of the second polarized signal is reflected by the surface 122, while another portion of the second polarized signal is reflected by the substrate 118. The EM wave detector 106 receives or detects the surface and substrate EM signals reflected of the second EM signal from the surface 122 and the substrate 118, respectively.

The detected surface and substrate EM signals of the reflected second EM signal can be processed or stored at the EM wave detector 106 or the controller 114. The detected EM signal obtained while the first polarizer 108 is in the second position or the first polarizer 108 and the second polarizer 210 are in the second orientation can be used to define a second data set. Similar to the first data set, the second data set can include information related to the surface and substrate EM signals as a function of time.

While the moving from the first to the second position or orientation is illustrated as rotating the first polarizer 108 or the second polarizer 110, any number of polarizers could be rotated, replaced, added, or removed to the system to provide the same effect of providing EM signals in differing planes of polarization as described above.

Rotating the one or more polarizers of the EM source system 142 allows the EM wave source 104, the airfoil 116, and the mount assembly 102 to remain in the same position or location. Keeping the mount assembly 102, the airfoil 116, and at least the EM wave source 104 in the same position increases the accuracy of the first EM signal and the second EM signal reflecting from overlapping locations or a same point of interest illustrated as the area of interest 136. That is, the airfoil 116 and the mount assembly 102 remain stationary or in the same position, orientation, or location for the application of the first EM signal and the second EM signal.

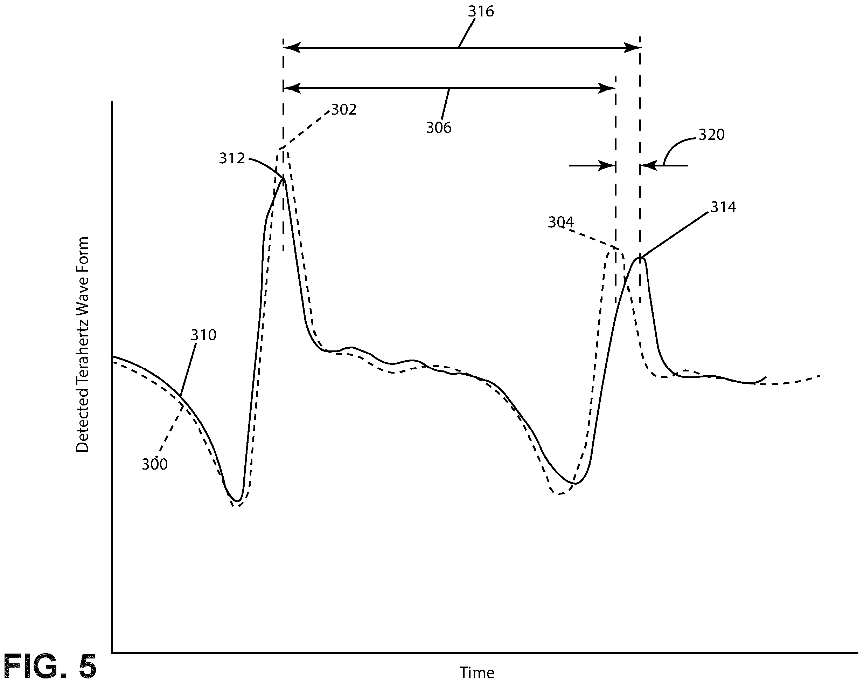

FIG. 5 illustrates one example of test results obtained from the inspection system 100. The first data set can be illustrated as a first wave form 300 over time. The first wave form 300 can include a first surface peak 302, illustrating the wave peak or greatest detection of the portion of the first polarizing signal reflecting at the interface of the air and the surface 122 (FIG. 2). The first substrate peak 304 can be the wave peak or greatest detection of the portion of the first polarizing signal reflecting off the substrate 118 at the interface of the coating 120 and the substrate 118 (FIG. 2). The first substrate peak 304 is expected to be after, or delayed, from the first surface peak 302. The delay is due to the portion of the first polarizing signal reflected by the substrate 118 having to travel farther (through the coating 120) as well as the change in speed (slowing) as it passes through the coating 120 (FIG. 2).

That is, the first surface peak 302 and the first substrate peak 304 can be the detection of at least two reflected signals based on the first electromagnetic signal illustrated, by way of example, as the first wave form 300.

A first time delay 306 can be defined as the difference in time between the first surface peak 302 and the first substrate peak 304.

While illustrated and described herein as the first time delay between the first surface peak 302 and the first substrate peak 304, it is contemplated that the first time delay or any time delay described herein can be determined between the first surface peak 302 or the first substrate peak 304 and subsequent peaks (not illustrated). The subsequent peaks are expected to be after, or delayed, from the first substrate peak 304. The delay is due to the portion of the first polarizing signal being internally reflected at least once within the coating 120. That is, the subsequent peaks can be one or more wave peaks corresponding to the portion of the first polarizing signal that is internally reflected within the coating 120 before returning to the EM wave detector 106 (FIG. 2). That is, for example, a portion of the first polarizing signal can be reflected at the interface of the substrate 118 and the coating 120, then reflected at the interface of the surface 122 and the air, and finally reflected again at the interface of the substrate 118 and the coating 120 before detection at the EM wave detector 106 (FIG. 2).

The second data set can be illustrated as a second wave form 310 over time. The second wave form 310 can include a second surface peak 312 illustrating the wave peak or greatest detection of the portion of the second polarizing signal reflecting from the surface 122 (FIG. 2). The second surface peak 312 aligns with the first surface peak 302, as both the first polarized signal and the second polarized signal are projected to the same area of interest 136 (FIG. 2) from the same distance.

A second substrate peak 314 can be the wave peak or greatest detection of the portion of the second polarizing signal reflecting off the interface of the substrate 118 and the coating 120 (FIG. 2). The second substrate peak 314 is expected to be after, or delayed, from the second surface peak 312. The second substrate peak 314 can align with or be distinct or different from the first substrate peak 304.

A second time delay 316 can be defined as the difference in time between the second surface peak 312 and the second substrate peak 314.

A time difference 320 between the first time delay 306 and the second time delay 316 can be illustrated as the time between the first substrate peak 304 and the second substrate peak 314.

In birefringent materials, the refractive index is dependent on the plane of polarization of an incident beam or polarized EM signal. Birefringent materials are anisotropic in nature (i.e., they have a defined crystal structure periodicity). In the inspection system 100 described herein, at least one polarizer is rotated to enable time delay data to be obtained with the EM signal provided at different planes of polarization to overlapping locations indicative of the same location. In many known thermal barrier coatings (that include at least one birefringent material) at least two different types of microstructures are typically observed. One is a columnar type, which is more ordered and anisotropic in nature. The other is a cauliflower type, which is more random in structure (i.e., isotropic). While the microstructure can be distinctly columnar type or distinctly cauliflower type, it is contemplated that the microstructure of the coating 120 can be between or include characteristics of both isotropic and anisotropic structure. For example, the microstructure of the coating 120 can have a percentage of the microstructure that is isotropic and a remaining percentage or portion of the remaining percentage of the microstructure that can be anisotropic.

It is expected that the time delay will vary in anisotropic materials, and that the time delay will be largely consistent in isotropic materials, as the sample is inspected using EM signals in different planes of polarization. Using the time delay established from the first and second data sets, the amount of birefringence contained within a particular sample is determinable, thereby enabling the type of microstructure to be identified in a fast, efficient, and non-destructive manner. The inspection system 100, as described herein, allows the determination of the microstructure of the coating 120 to be determined in a contactless manner, where only the EM signal or terahertz signal reflects off the airfoil 116. Therefore, by way of non-limiting example, the time difference 320 between the first time delay 306 and the second time delay 316 can correspond to a range of values, where intervals of the range correspond to a microstructure type of the coating 120 or birefringent materials.

Additionally, or alternatively, the time difference 320 can be compared to a threshold value. If the time difference 320 satisfies the predetermined threshold, the microstructure type of the coating 120 can be considered columnar, ordered, and therefore inherently anisotropic in nature. For example, if the time difference 320 is equal to or greater than the predetermined threshold, the microstructure of the coating 120 can be determined to be anisotropic. If the time difference 320 is less than the predetermined threshold, the microstructure of the coating 120 can be determined to be isotropic.

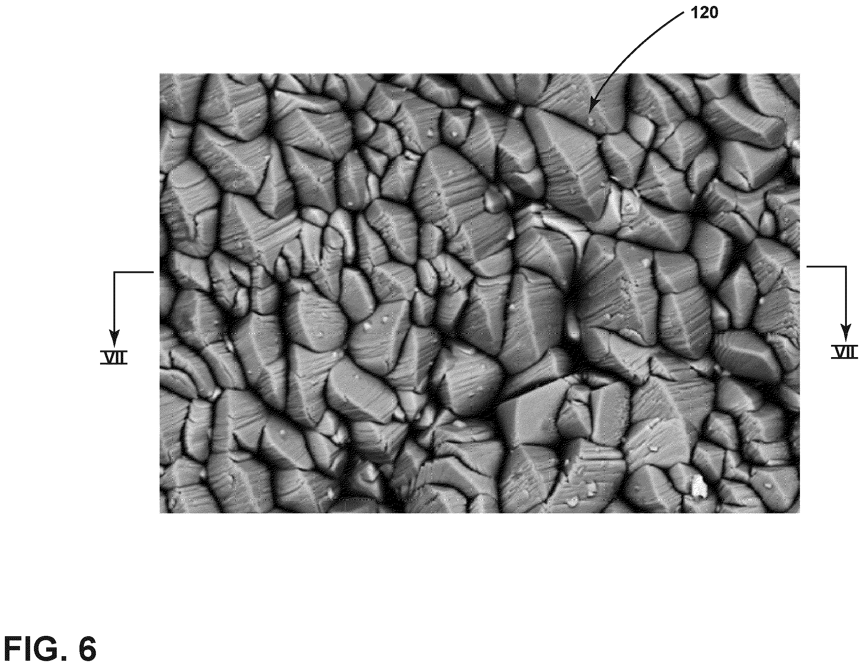

FIG. 6 is an example of a columnar type microstructure or an inherently anisotropic microstructure for the coating 120. As illustrated, the microstructure of the coating 120 is anisotropic in nature, having a columnar and ordered structure. The image illustrated in FIG. 6 was captured by a scanning electron microscope at the surface 122 of the coating 120.

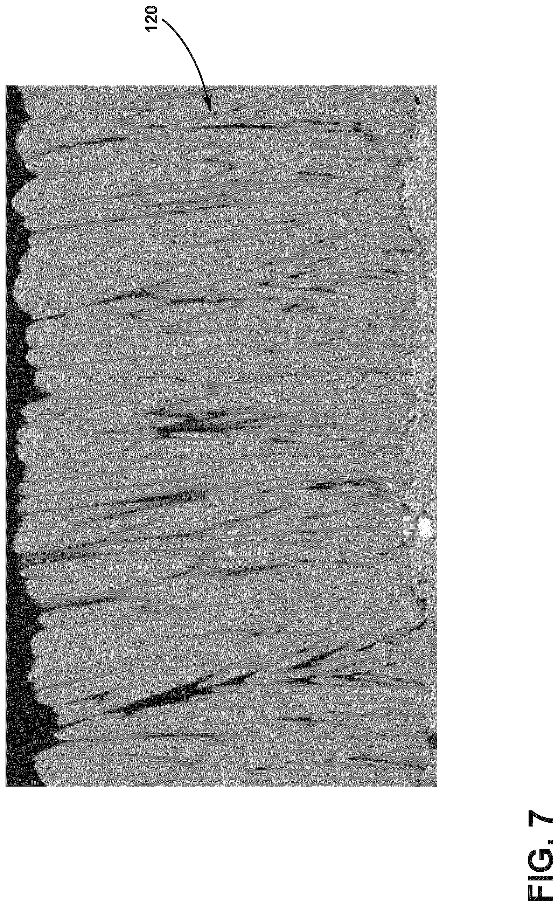

FIG. 7 is a cross-sectional view of the microstructure type of FIG. 6. The image illustrated in FIG. 7 was captured by a scanning electron microscope after destructive testing and further illustrates the columnar and ordered structure of an anisotropic microstructure.

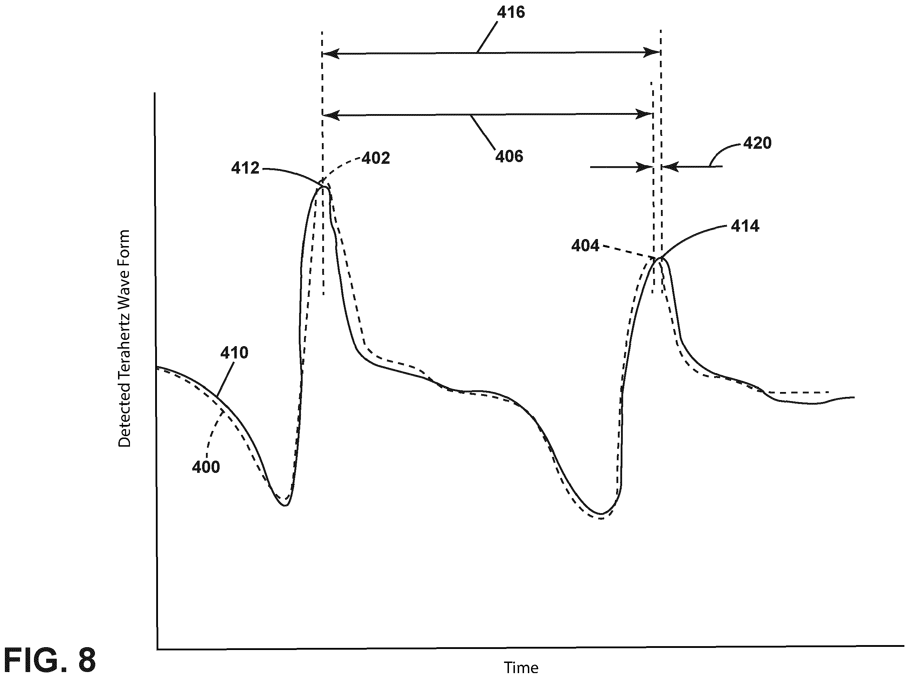

FIG. 8 illustrates another example of test results obtained from the inspection system 100 (FIG. 1). The first data set can be illustrated as a first wave form 400 over time. The first wave form 400 can include a first surface peak 402, illustrating the wave peak or greatest detection of the portion of the first polarizing reflecting from the surface 122 (FIG. 2). The first substrate peak 404 can be the wave peak or greatest detection of the portion of the first polarizing signal reflecting off the substrate 118 at the interface of the coating 120 and the substrate 118 (FIG. 2). The first substrate peak 404 is expected to be after, or delayed, from the first surface peak 402. The delay is due to the portion of the first polarizing signal reflected by the substrate 118 having to travel farther (through the coating 120) as well as the change in speed (slowing) as it passes through the coating 120 (FIG. 2).

A first time delay 406 can be defined as the difference in time between the first surface peak 402 and the first substrate peak 404.

The second data set can be illustrated as a second wave form 410 over time. The second wave form 410 can include a second surface peak 412 illustrating the wave peak or greatest detection of the portion of the second polarizing signal reflecting from the surface 122 (FIG. 2). The second surface peak 412 aligns with the first surface peak 402, as both the first polarized signal and the second polarized signal are projected to the same area of interest 136 (FIG. 2) from the same distance.

The second substrate peak 414 can be the wave peak or greatest detection of the portion of the second polarizing signal reflecting off the substrate 118 at the interface of the coating 120 and the substrate 118 (FIG. 2). The second substrate peak 414 is expected to be after, or delayed, from the second surface peak 412. The second substrate peak 414 can align with or be distinct or different from the first substrate peak 404.

A second time delay 416 can be defined as the difference in time between the second surface peak 412 and the second substrate peak 414.

A time difference 420 between the first time delay 406 and the second time delay 416 can be illustrated as the time between the first substrate peak 404 and the second substrate peak 414.

If the time difference 420 is less than or equal to a predetermined value or threshold, the microstructure type of the coating 120 (FIG. 2) can be considered more isotropic in nature, having a more randomized structure.

If the time difference 420 is less than the predetermined value or threshold, the microstructure type of the coating 120 (FIG. 2) can be considered more isotropic in nature, having a more randomized structure. Whereas, if the time difference 420 is equal to or greater than the predetermined value or threshold, the microstructure type of the coating 120 (FIG. 2) can be considered more anisotropic.

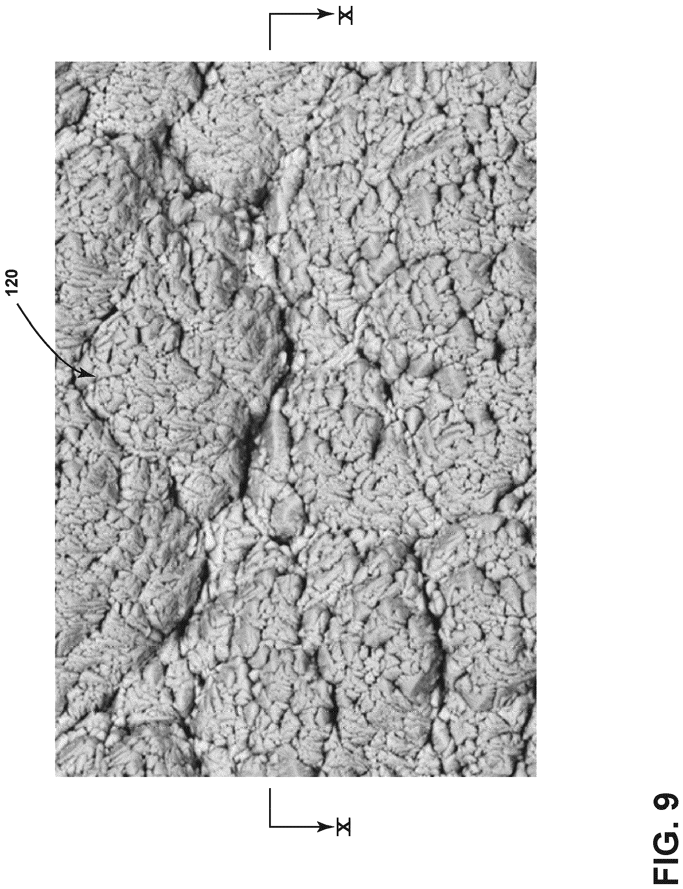

FIG. 9 is an example of a cauliflower type microstructure or an inherently isotropic microstructure for the coating 120. As illustrated, the microstructure of the coating 120 is isotropic in nature, having a randomized structure. The image illustrated in FIG. 9 was captured by a scanning electron microscope at the surface 122 of the coating 120.

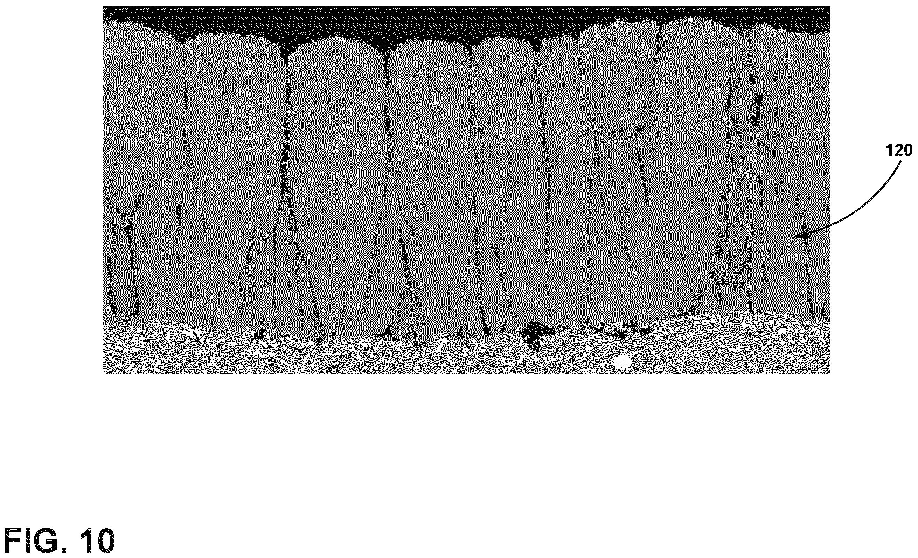

FIG. 10 is a cross-sectional view of the microstructure type of FIG. 9. The image illustrated in FIG. 10 was captured by a scanning electron microscope after destructive testing and further illustrates the randomized structure of an isotropic microstructure.

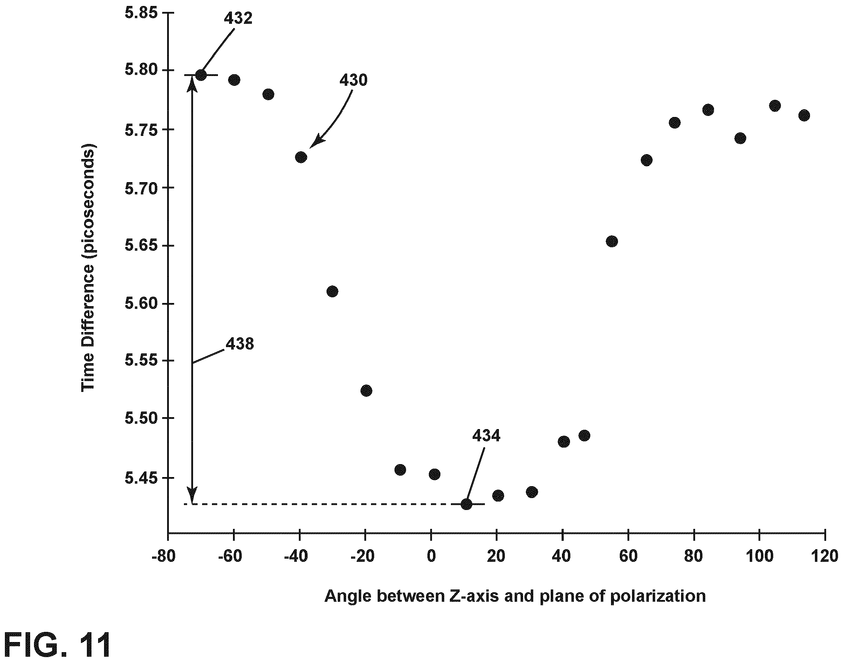

FIG. 11 illustrates an example of a set of time delays 430 obtained from the inspection system 100 for the set of EM signals. At least one time delay of the set of time delays 430 can be obtained by changing the plane of polarization for each EM signal of the set of EM signals to a different plane of polarization, and calculating a corresponding time delay. That is, the set of time delays 430 can be determined by varying the plane of polarization. In other words, the set of time delays 430 can be determined by varying the first pass axis 152 or the second pass axis 156, thereby providing an EM signal to the airfoil 116 at a different plane of polarization for each variation of the first pass axis or the second pass axis.

A time delay maximum 432 and a time delay minimum 434 can be identified or determined from the set of time delays 430. The time delay maximum 432 can be a largest value time delay in the set of time delays 430. The time delay minimum 434 can be a smallest value time delay in the set of time delays 430. Alternatively, the time delay maximum 432 or the time delay minimum 434 can be determined as an average or other known mathematical interpretation of a subset of the set of time delays 430.

Optionally, the set of time delays 430 can be normalized, for example, using the time delay maximum 432, the time delay minimum 434, or an average time delay value determined from the set of time delays 430.

An interval 438 can be determined as the difference between the time delay maximum 432 and the time delay minimum 434. The interval 438 can be compared to a predetermined value or a predetermined range of values. The comparison to the predetermined value or the predetermined range of values can be used to determine the microstructure of the coating 120. If the interval 438 is less than the predetermined value or predetermined threshold, the microstructure type of the coating 120 (FIG. 2) can be considered more isotropic in nature, having a more randomized structure. Whereas, if the interval 438 is equal to or greater than the predetermined value or predetermined threshold, the microstructure type of the coating 120 (FIG. 2) can be considered more anisotropic, having a more uniform or columnar structure.

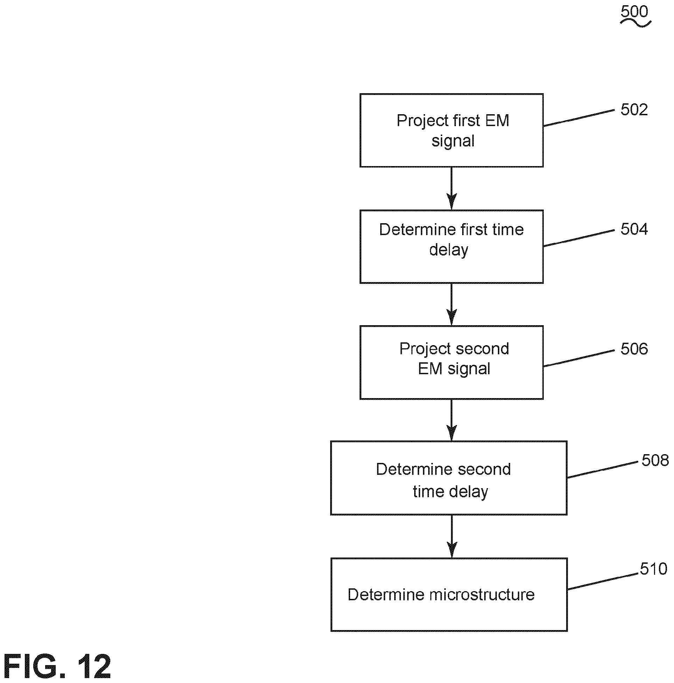

FIG. 12 illustrates a flowchart of a method 500 for determining the microstructure of the coating 120 of a component, where the component is illustrated, by way of non-limiting example, as the airfoil 116. While the method 500 is suitable for many different coatings, it is particularly well-suited for TBC because the method 500 is non-destructive, non-contact, and highly accurate at determining the microstructure of components having TBC.

Knowing the microstructure of the TBC is critical as some microstructures are more effective at protecting components from exposure to high temperatures, while other microstructures may have a comparatively reduced effectiveness to high temperatures, making the service life of the component shorter. Therefore, the method 500 can be used to determine a quality of the microstructure of the coating 120. Further, the method 500 can be used to determine percentages of microstructure type of the coating 120.

At 502, the first EM signal in the first plane of polarization is projected onto the coating 120.

The first EM signal or first polarized signal can be supplied by the EM wave source 104. The source signal 130 supplied by the EM wave source 104 that results in the first EM signal can be a polarized terahertz EM signal. The source signal 130 can be polarized to define the first polarized signal that is directed at the coating. The polarization of the source signal 130 can result from the first orientation of the first polarizer 108 and the second polarizer 110. That is, the first plane of polarization and the first EM signal can be determined by the first orientation of the first polarizer 108 and the second polarizer 110.

Alternatively, the polarization of the source signal 130 can result from the first position of the first polarizer 108, where the polarized signal leaving the first polarizer 108 can define the first plane of polarization and the first EM signal.

The first EM signal incident on the surface 122 of the coating 120 at the same point of interest or the area of interest 136 is partially reflected by at the interface between the air and the surface 122, defining a reflected portion of the first EM signal.

Another portion of the first EM signal is refracted at the interface between the air and surface and reflected at the interface of the substrate 118 and the coating 120, defining a refracted and reflected portion of the first EM signal.

The EM wave detector 106 can detect, using at least one detector, the reflected portion of the first EM signal and the refracted and reflected portion of the first EM signal. The detected first EM signal can define the first set of data. That is, the EM wave detector 106 can detect at least two reflected signals based on the first EM signal, illustrated as the reflected portion of the first EM signal and the refracted and reflected portion of the first EM signal.

At 504, the first time delay 306, 406 is determined based on a reflected portion of the first electromagnetic signal and a refracted and reflected portion of the first electromagnetic signal. The first time delay 306, 406 can be the time from the first surface peak 302, 402 to the first substrate peak 304, 404.

Optionally, the first set of data can be used to accurately determine TBC thickness. That is, the thickness of the coating 120 can be determined by the difference in the distance traveled by the reflected portion of the first EM signal and the refracted and reflected portion of the first EM signal.

At 506, the second EM signal is projected in the second plane of polarization, different from the first plane of polarization, onto the coating 120.

The second EM signal or second polarized signal can result from the polarization of the source signal 130 when the first polarizer 108 and the second polarizer 210 are in the second orientation. That is, the second plane of polarization and the second EM signal directed at the coating 120 can be determined by the second orientation of the first polarizer 108 and the second polarizer 210.

Alternatively, the second EM signal or second polarized signal can result from the rotation of the first polarizer 108 to a second position, where the polarized signal leaving the first polarizer 108, when in the second position, can define the second plane of polarization and the second EM signal directed at the coating 120.

The second EM signal incident on the surface 122 of the coating 120 at an area of interest 136 is partially reflected by at the interface between the air and the surface 122, defining a reflected portion of the second EM signal.

Another portion of the second EM signal is refracted at the interface between the air and surface and reflected at the interface of the substrate 118 and the coating 120, defining a refracted and reflected portion of the second EM signal.

The EM wave detector 106 can detect the at least two reflected signals based on the second EM signal, illustrated as the reflected portion of the second EM signal and the refracted and reflected portion of the second EM signal. The detected at least two reflected signals of the second EM signal can define the second set of data.

At 508, the second time delay 316, 416 is determined based on the reflected portion of the second EM signal and a refracted and reflected portion of the second EM signal. The second time delay 316, 416 can be the time from the second surface peak 312, 412 to the second substrate peak 314, 414.

Optionally, the determination of the first time delay 306, 406 and the second time delay 316, 416 can occur at 508, where the first time delay 306, 406 and the second time delay 316, 416 are based on the first set of data and the second set of data, respectively. That is, the determination of the first time delay 306, 406 can happen after the second EM signal is projected in the second plane of polarization at 506 and can happen simultaneously, before, or after the determination of the second time delay 316, 416.

At 510, the microstructure of the coating 120 can be determined based on the difference or time difference 320, 420 in the first time delay 306, 406 and the second time delay 316, 416. That is, the first time delay 306, 406 and the second time delay 316, 416 can be compared to determine the time difference 320, 420. The time difference 320, 420 can be compared to one or more predetermined threshold values or to a range of values to determine the microstructure of the coating 120.

The method 500 can be used to determine the quality of the microstructure of the coating 120 via comparing the time difference 320, 420 to one or more predetermined thresholds or predetermined ranges.

For example, when using predetermined thresholds, the microstructure can be considered isotropic when the time difference 320, 420 satisfies a predetermined threshold value. If the time difference 320, 420 is less than the predetermined value or predetermined threshold value, the microstructure type of the coating 120 (FIG. 2) can be considered more isotropic in nature, having a more randomized structure.

Another non-limiting example can be the microstructure of the coating 120 is anisotropic when the time difference 320, 420 is equal to or greater than a predetermined threshold value. If the time difference 320, 420 is equal to or greater than the predetermined value or predetermined threshold value, the microstructure type of the coating 120 (FIG. 2) can be considered more anisotropic, having a more uniform or columnar structure.

An example of using ranges is that the time difference 320, 420 can correspond to a likelihood of percentages of microstructure. That is, when the time difference falls between a predetermined range, the microstructure could be, for example, approximately 70% isotropic and 30% anisotropic, where approximately includes plus or minus 5%. Therefore, the method 500 can be used to determine percentages of microstructure type of the coating 120.

The method 500 can be used to probe microstructural variations where polarization dependent transit time measurements or time delays can be performed using a pair of THz polarizers illustrated as the first polarizer 108 and the second polarizer 110, 210. By placing two THz polarizers against a THz sensor head illustrated as the EM wave source 104 and changing the optic axis orientation of one polarizer (illustrated as changing the second polarizer 110 from the first position to the second polarizer 210 in the second polarizer from FIG. 3 to FIG. 4) with respect to another, the emitted THz pulses polarization can be changed from parallel to perpendicular and in between if required.

At parallel and perpendicular polarizations (first and second positions), for a same TBC thickness distance (thickness of 120 measured from the substrate 118 to the surface 122 of the coating 120), the pulse transit time varies depending on the TBC microstructure. The pulse transit time variation is illustrated, by way of example, as the difference between the first time delay 306, 406 and the second time delay 316, 416, quantified as the time difference 420. For anisotropic columnar TBC microstructures, the pulse transit time varies significantly going from parallel to perpendicular polarization. For isotropic TBC microstructures such as cauliflower, the pulse transit time variation versus polarization would be minimal. That is, larger values for the time difference 420 resulting from a large variation between the first time delay 306, 406 and the second time delay 316, 416 can be indicative of anisotropic TBC microstructures. Similarly, small values for the time difference 420 resulting from a small or no variation between the first time delay 306, 406 and the second time delay 316, 416 can be indicative of isotropic TBC microstructures.

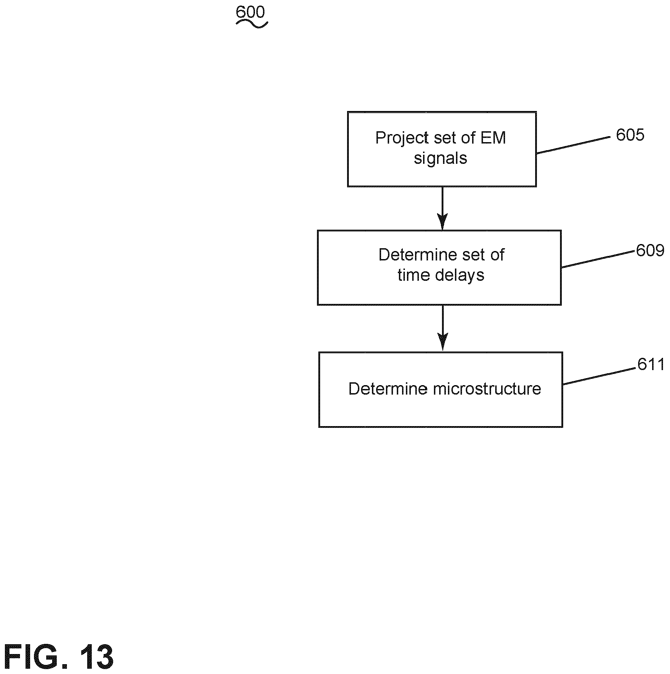

FIG. 13 illustrates a flowchart of a method 600 for determining the microstructure of the coating 120 of a component, where the component is illustrated, by way of non-limiting example, as the airfoil 116. While similar to the method 500, the method 600 can be used to determine a quality of the microstructure of the coating 120 or used to determine percentages of microstructure type of the coating 120 using the set of time delays 430.

At 605, the set of EM signals are projected onto the coating 120 of the airfoil 116. The set of EM signals includes at least two EM signals, although any number of EM signals greater than or equal to two are contemplated. Each EM signal of the set of EM signals corresponds to a unique plane of polarization.

The set of EM signals can result from incremental rotation of the first polarizer 108 with respect to the Z-axis or the plane confining the electric field of the source signal. Alternatively, if more than one polarizer is used, the set of EM signals can be generated by incremental rotation of, for example, the first polarizer 108, the second polarizer 110, or the inclusion of additional polarizers.

By way of non-limiting example, the first pass axis 152 of the first polarizer 108 can be positioned at -85 degrees with respect to the Z-axis or the plane confining the electric field of the source signal. The first polarizer 108 can then be rotated in 5-degree increments from -85 degrees to 85 degrees with respect to the plane confining the electric field of the source signal, where a time delay is determined at each increment. In this example, there would be 35 different EM signals in the set of EM signals corresponding to 35 data sets.

By way of further non-limiting example, in a two polarizer set-up, the first pass axis 152 of the first polarizer 108 can be orientated at 45 degrees to the Z-axis or the plane confining the electric field of the source signal 130.

The second polarizer 110 can then be rotated so that the angle between the first pass axis 152 and the second pass axis 156, 256 can be between, but not equal to -90 degrees and 90.

At 609, the set of time delays 430 can be determined, where each time delay of the set of time delays 430 corresponds to each of the EM signals of the set of EM signals.

Each of the time delays of the set of time delays 430 can be determined based on the reflected portion of the corresponding electromagnetic signal and the refracted and reflected portion of the corresponding electromagnetic signal. The time delay can be the time from the surface peak 302, 402 to the substrate peak 304, 404.

Using the example above, where the set of EM signals includes 35 EM signals, the set of time delays 430 determined from the set of EM signals includes 35 time delays, where each time delay of the set of time delays 430 corresponds to one of the EM signals of the set of EM signals.

The set of time delays 430 can be used to determine the interval 438, where the interval 438 is defined as the difference between the time delay maximum 432 and the time delay minimum 434.

Optionally, the set of time delays 430 can be normalized prior to determining the interval 438. Normalization of the set of time delays 430 can be based, for example, on the time delay maximum 432, the time delay minimum 434, or an average of the set of time delays 430.

At 611, the microstructure of the coating 120 can be determined. The microstructure of the coating 120 can be determined by comparing the interval 438 to one or more predetermined threshold values or predetermined ranges of values.

When the set of time delays 430 are normalized it is contemplated that the comparison of the interval 438 to the predetermined value or the predetermined range of values can include a standard predetermined value or standard predetermined range of values.

Alternatively, if the set of time delays 430, for example, is not normalized, the comparison of the interval 438 to a predetermined value or a predetermined range of values can be based on a thickness of the coating 120 measured from the interface of the substrate 118 and the coating 120 to the interface of the coating 120 and the air. For different thicknesses of the coating 120, different predetermined values or predetermined range of values can be used. Optionally, the thickness of the coating 120 can be determined using one or more time delays from the set of time delays 430.

For example, if the interval 438 is less than the predetermined value or predetermined threshold value, the microstructure type of the coating 120 (FIG. 2) can be considered more isotropic in nature, having a more randomized structure. Whereas, if the interval 438 is equal to or greater than the predetermined value or predetermined threshold value, the microstructure type of the coating 120 (FIG. 2) can be considered more anisotropic, having a more uniform or columnar structure.

An example of using ranges is that the interval 438 can correspond to a likelihood of percentages of microstructure. That is, when the interval 438 falls in a first predetermined range, the microstructure could be, for example, approximately 70% isotropic and 30% anisotropic, where approximately includes plus or minus 5%. If the interval 438 falls in a second predetermined range, the microstructure could be, for example, approximately 60% isotropic and 40% anisotropic, where approximately includes plus or minus 5%. If the interval 438 falls in a second predetermined range, the microstructure could be, for example, approximately 50% isotropic and 50% anisotropic, where approximately includes plus or minus 5%.

While illustrated as three predetermined ranges, any number of predetermined ranges are contemplated corresponding to different percentages of isotropic and anisotropic microstructures.

Therefore, the method 600 can be used to determine the microstructure type of the coating 120 by comparing the interval 438 to one or more predetermined values or predetermined threshold values. Additionally, or alternatively, the method 600 can provide percentages of microstructure type of the coating 120 by comparing the interval 438 to predetermined ranges.

Benefits associated with the inspection system disclosed herein, include stationary parts throughout inspection. The methods do not require the movement of the component, illustrated as the airfoil, which increases the accuracy of determining the microstructure of the coating on the component.

Another benefit is that the microstructure of the coating can be determined without destroying the part or component in a non-contact way.

Further, the inspection system and methods disclosed herein reduce the time required to perform the determination of microstructure. Destructive analysis to determine microstructures of the coating can be 24-48 hours, wherein the inspection system and methods disclosed herein can take 10-20 minutes to determine microstructures of the coating.

Another benefit is that more components can be checked. The inspection method is non-destructive and non-contact. Therefore, more components than traditionally tested or all manufactured components can be inspected using the inspection system and methods described herein.

Further aspects of the disclosure are provided by the subject matter of the following clauses: A method for determining a microstructure of a coating on a component, the method comprising projecting a first electromagnetic signal in a first plane of polarization onto the coating, detecting at least two reflected signals based on the first electromagnetic signal, determining a first time delay based on the at least two reflected signals based on the first electromagnetic signal, projecting a second electromagnetic signal in a second plane of polarization, different from the first plane of polarization, onto the coating, detecting at least two reflected signals based on the second electromagnetic signal, determining a second time delay based on the at least two reflected signals based on the second electromagnetic signal, and determining the microstructure of the coating based on a difference in the first time delay and the second time delay.

A method for determining a microstructure of a coating on a component, the method comprising projecting a first electromagnetic signal in a first plane of polarization onto the coating, determining a first time delay based on a reflected signal of the first electromagnetic signal, projecting a second electromagnetic signal in a second plane of polarization, different from the first plane of polarization, onto the coating, determining a second time delay based on a reflected portion of the second electromagnetic signal, and determining the microstructure of the coating based on a difference in the first time delay and the second time delay.

The method of any preceding clause, wherein the first electromagnetic signal and the second electromagnetic signal are projected to overlapping locations on the coating.

The method of any preceding clause, wherein the first electromagnetic signal and the second electromagnetic signal have a frequency between 0.001 and 10.0 terahertz.

The method of any preceding clause, wherein an angular difference between a first pass angle and a second pass angle is between -90 degrees and 90 degrees.

The method of any preceding clause, wherein an angle between the first plane of polarization and the second plane of polarization is equal to or between 85 degrees and 95 degrees.

The method of any preceding clause, wherein detecting the at least two reflected signals based on the first electromagnetic signal includes detecting a reflected portion of the reflected signal, wherein the reflected portion is defined by a portion of the first electromagnetic signal reflected at an interface of air and a surface of the coating.

The method of any preceding clause, wherein detecting the at least two reflected signals based on the first electromagnetic signal includes detecting a refracted and reflected portion of the reflected signal, wherein the refracted and reflected portion is defined by a portion of the first electromagnetic signal reflected from an interface of a substrate of the component and refracted by the coating.

The method of any preceding clause, wherein detecting the at least two reflected signals based on the second electromagnetic signal includes detecting a reflected portion of the second electromagnetic signal, wherein the reflected portion of the second electromagnetic signal is reflected from the surface of the coating.

The method of any preceding clause, wherein detecting the at least two reflected signals based on the second electromagnetic signal further comprises detecting a refracted and reflected portion of the second electromagnetic signal, wherein the refracted and reflected portion of the second electromagnetic signal is reflected from the interface of the substrate of the component and refracted by the coating.

The method of any preceding clause, wherein the coating is a thermal barrier coating comprising at least one birefringent material.

The method of any preceding clause, wherein the first electromagnetic signal and the second electromagnetic signal have a frequency between 0.05 terahertz and 4.5 terahertz.

The method of any preceding clause, wherein the first electromagnetic signal and the second electromagnetic signal are each a plurality of electromagnetic pulses.

The method of any preceding clause, wherein the microstructure of the coating is isotropic when the difference between the first time delay and the second time delay is less than a predetermined threshold value.

The method of any preceding clause, wherein the microstructure of the coating is anisotropic when the difference between the first time delay and the second time delay is greater than or equal to a predetermined threshold value.

The method of any preceding clause, wherein the first time delay and the second time delay are part of a set of time delays.

The method of any preceding clause, wherein the set of time delays is normalized prior to determining the microstructure of the coating.

A method for determining a microstructure of a coating on a component, the method comprising supplying an electromagnetic signal from a source, polarizing the supplied electromagnetic signal to define a first polarized signal and directing the first polarized signal to the coating applied to a portion of the component, detecting, using at least one detector, a portion of the first polarized signal reflected from a surface of the coating, and a portion of the first polarized signal reflected at an interface of a substrate of the component and refracted by the coating, determining a first time delay between the portion of the first polarized signal reflected from the surface of the coating and the portion of the first polarized signal reflected at the interface of the substrate of the component and refracted by the coating, polarizing the supplied electromagnetic signal to define a second polarized signal, having a different plane of polarization than the first polarized signal, and directing the second polarized signal to the portion of the component, detecting, using the at least one detector, a portion of the second polarized signal reflected from the surface of the coating, and a portion of the second polarized signal reflected at the interface of the substrate of the component and the coating, determining a second time delay between the portion of the second polarized signal reflected from the surface of the coating and the portion of the second polarized signal reflected at the interface of the substrate of the component and the coating, and comparing the first time delay and the second time delay to determine a time difference to determine the microstructure of the coating on the component.

The method of any preceding clause, wherein the comparing includes determining a difference between the first time delay and the second time delay and comparing the difference to a threshold value to determine the microstructure of the coating on the component.

The method of any preceding clause, wherein the microstructure of the coating is isotropic when the difference between the first time delay and the second time delay is less than a predetermined threshold value.

The method of any preceding clause, wherein the microstructure of the coating is anisotropic when the difference between the first time delay and the second time delay is greater than or equal to a predetermined threshold value.

The method of any preceding clause, wherein the electromagnetic signal from the source has a frequency between 0.001 and 10.0 terahertz.

The method of any preceding clause, wherein the supplied electromagnetic signal is polarized at the source, therefore supplying a polarized electromagnetic signal from the source.

The method of any preceding clause, wherein the polarizing the supplied electromagnetic signal to define the first polarized signal further includes polarizing the supplied electromagnetic signal at a first polarizer having a first pass axis to define an intermediate signal, and polarizing the intermediate signal with a second polarizer having a second pass axis, wherein the second pass axis is at a first angle with respect to the first pass axis.

The method of any preceding clause, wherein the polarizing the supplied electromagnetic signal to define the second polarized signal further includes polarizing the supplied electromagnetic signal at the first polarizer having the first pass axis to define the intermediate signal, and polarizing the intermediate signal with the second polarizer having the second pass axis, wherein the second pass axis is at a second angle with respect to the first pass axis, wherein the second angle is different than the first angle.

An inspection system for determining a microstructure of a coating applied to a component, the inspection system comprising a mount assembly receiving the component, an EM source system providing a first electromagnetic signal in a first plane of polarization and a second electromagnetic signal in a second plane of polarization to the coating of the component, wherein the component is stationary within the mount assembly, an electromagnetic wave detector that receives a portion of the first and second electromagnetic signals reflected from an interface of air and a surface of the coating, and a portion of the first and second electromagnetic signals reflected from an interface of the coating and a substrate of the component, and at least one controller, wherein the controller determines a first time delay and a second time delay based on at least an output from the electromagnetic wave detector indicative of the first electromagnetic signal and the second electromagnetic signal, and wherein a difference between the first time delay and the second time delay determined by the at least one controller corresponds to the microstructure of the coating.

A method for determining a microstructure of a coating on a component, the method comprising projecting a set of electromagnetic signals onto the coating, wherein each electromagnetic signal of the set of electromagnetic signals corresponds to a unique plane of polarization, determining a set of time delays based on the reflected signals of the set of electromagnetic signals, where each time delay of the set of time delays corresponds each electromagnetic signal of the set of electromagnetic signals, identifying a time delay maximum and a time delay minimum from the set of time delays, determining an interval based on a difference between the time delay maximum and the time delay minimum, and comparing the interval to a predetermined value or range of values to determine the microstructure of the coating.

The method of any preceding clause, wherein the set of time delays is normalized prior to determining the interval.

The method of any preceding clause, further comprising determining a thickness of the coating.

The method of any preceding clause, wherein the microstructure of the coating is isotropic when the interval is less than a predetermined value.

The method of any preceding clause, wherein the microstructure of the coating is anisotropic when the interval is greater than or equal to a predetermined value.

## Claims

1. A method (500, 600) for determining (510, 611) a microstructure of a coating (120) on a component (116), the method (500, 600) comprising:
projecting (502, 602) a first electromagnetic signal in a first plane of polarization onto the coating (120);
detecting (502, 602) at least two reflected signals (138, 140) based on the first electromagnetic signal;
determining (504, 609) a first time delay (406, 430) based on the at least two reflected signals (138, 140) based on the first electromagnetic signal;
projecting (506, 602) a second electromagnetic signal in a second plane of polarization, different from the first plane of polarization, onto the coating (120);
detecting (506, 602) at least two reflected signals (138, 140) based on the second electromagnetic signal;
determining (508, 609) a second time delay (416, 430) based on the at least two reflected signals (138, 140) based on the second electromagnetic signal; and
determining (510, 611) the microstructure of the coating (120) based on a difference in the first time delay (406, 430) and the second time delay (416, 430).

2. The method (500, 600) of claim 1, wherein the first electromagnetic signal and the second electromagnetic signal are projected to a same point of interest (136) on the coating (120).

3. The method (500, 600) of claim 2, wherein the first electromagnetic signal and the second electromagnetic signal have a frequency between 0.001 terahertz and 10.0 terahertz.

4. The method (500, 600) of any of claims 1-3, wherein an angle between the first plane of polarization and the second plane of polarization is equal to or between 85 degrees and 95 degrees.

5. The method (500, 600) of any of claims 1-4, wherein detecting (502, 602) the at least two reflected signals (138, 140) based on the first electromagnetic signal includes detecting a reflected portion (138), wherein the reflected portion (138) is defined by a portion of the first electromagnetic signal reflected at an interface of air and a surface (122) of the coating (120).

6. The method (500, 600) of claim 5, wherein detecting (502, 602) the at least two reflected signals (138, 140) based on the first electromagnetic signal includes further comprises detecting a refracted and reflected portion (140), wherein the refracted and reflected portion (140) is defined by a portion of the first electromagnetic signal reflected from an interface of a substrate (118) of the component (116) and refracted by the coating (120).

7. The method (500, 600) of claim 6, wherein detecting (506, 602) the at least two reflected signals (138, 140) based on the second electromagnetic signal includes detecting a reflected portion (138) of the second electromagnetic signal, wherein the reflected portion (138) of the second electromagnetic signal is reflected from the surface (122) of the coating (120).

8. The method (500, 600) of claim 7, wherein detecting (506, 602) the at least two reflected signals (138, 140) based on the second electromagnetic signal includes further comprises detecting a refracted and reflected portion (140) of the second electromagnetic signal, wherein the refracted and reflected portion (140) of the second electromagnetic signal is reflected from the interface of the substrate (118) of the component (116) and refracted by the coating (120).

9. The method (500, 600) of any of claims 1-8, wherein the first electromagnetic signal and the second electromagnetic signal are each a plurality of electromagnetic pulses.

10. The method (500, 600) of any of claims 1-9, wherein the first electromagnetic signal and the second electromagnetic signal have a frequency between 0.05 terahertz to 4.5 terahertz.

11. The method (500, 600) of any of claims 1-10, wherein the microstructure of the coating (120) is isotropic when the difference between the first time delay (406, 430) and the second time delay (416, 430) is less than a predetermined threshold value.

12. The method (500, 600) of any of claims 1-10, wherein the microstructure of the coating (120) is anisotropic when the difference between the first time delay (406, 430) and the second time delay (416, 430) is greater than or equal to a predetermined threshold value.

13. The method (500, 600) of any of claims 1-12, wherein the first time delay (406, 430) and the second time delay (416, 430) are part of a set of time delays (430).

14. The method (500, 600) of claim 13, wherein the set of time delays (430) is normalized prior to determining (510, 611) the microstructure of the coating (120).

15. The method (500, 600) of any of claims 1-14, further comprising determining a thickness of the coating (120).
